# EUROPÄISCHE PATENTSCHRIFT

(11) **EP 2 321 214 B1**
(45) Veröffentlichungstag und Bekanntmachung des Hinweises auf die Patenterteilung: **18.06.2014**
(21) Anmeldenummer: 09778261.9
(22) Anmeldetag: 02.09.2009
(51) Int. Cl.: F03D 1/00, F03D 11/04

(54) **VERFAHREN ZUM HERSTELLEN ZUMINDEST EINER BAUGRUPPE VON OFFSHORE-WINDENERGIEANLAGEN**
METHOD FOR THE PRODUCTION OF AT LEAST ONE SUBASSEMBLY of OFFSHORE WIND POWER STATIONS
PROCÉDÉ POUR PRODUIRE AU MOINS UN MODULE D'ÉOLIENNE OFFSHORE

(30) Priorität: 09.09.2008 DE 102008046360
(43) Veröffentlichungstag der Anmeldung: 18.05.2011
(73) Patentinhaber: STRABAG Offshore Wind GmbH, 70567 Stuttgart (DE)
(72) Erfinder: WEBER, Klaus, 72366 Balingen (DE)
(74) Vertreter: Riedel, Peter
(86) Internationale Anmeldenummer: PCT/EP2009/006335
(87) Internationale Veröffentlichungsnummer: WO 2010/028763

(56) Entgegenhaltungen:
- EP-A1- 1 777 348
- EP-A2- 1 691 073
- WO-A2-2008/036934
- DE-A1- 10 308 239
- JP-A- 2000 283 019
- KERR D: "SUPPORT STRUCTURES FOR AN OFFSHORE ARRAY OF VERTICAL AXIS WIND TURBINES -A DESIGN STUDY", WIND ENGINEERING, MULTI-SCIENCE PUBLISHING CO., BRENTWOOD, ESSEX, GB, Bd. 10, Nr. 1, 1. Januar 1986 (1986-01-01) , Seiten 47-61, XP001014352, ISSN: 0309-524X

## Beschreibung

Die Erfindung bezieht sich auf ein Verfahren zum Herstellen von zumindest einer Baugruppe von Offshore-Windenergieanlagen.

Im Zusammenhang mit Offshore-Windenergieanlagen sind Gründungen bekannt, bei denen Tripods an in den Meeresboden eingerammten Pfählen verankert werden. Diese Technologie ist aber umstritten, da durch den Lärm des Einrammens der Pfähle in den Meeresboden die Meeresfauna im erheblichen Maße belastet bzw. geschädigt wird. Die aus Stahl bestehenden Tripods müssen am Bestimmungsort mit den Pfählen verbunden werden, wofür gute Bedingungen hinsichtlich des Seegangs erforderlich sind.

In der EP 1 691 073 A2 wurde bereits vorgeschlagen, flächenmäßige Gründungen aus Beton vorzusehen, wobei ein aus Betonbalken gefertigtes kreuzförmiges Fundament auf dem Meeresboden abgesetzt wird. Mit einem solchen Fundament wird nicht nur die Umwelt geschont, es kann damit auch eine Kostenreduzierung erreicht werden. Allerdings wird die Installation eines solchen Fundamentes auf dem Meeresboden bei Wellengang stark behindert und ist bei hohem Seegang sogar unmöglich. Damit ist die Errichtung von Offshore-Windenergieanlagen lediglich auf das Sommerhalbjahr beschränkt und auch in dieser Zeit nur bei entsprechend ruhiger See möglich.

Aus dem Dokument KERR D: "SUPPORT STRUCTURES FOR AN OFFSHORE ARRAY OF VERTICAL AXIS WIND TURBINES - A DESIGN STUDY", WIND ENGINEERING; MULTI-SCIENCE PUBLISHING CO., BRENTWOOD, ESSEX, GB, Bd. 10, Nr. 1, 1. Januar 1986 (1986-01-01), Seiten 47-61 ist ein Areal im Hafen mit verschiedenen Produktionsbereichen für Offshore-Windenergieanlagen bekannt. Dabei sind geeignete Vorrichtungen zum Verfahren der Flachgründungen zwischen den jeweiligen Bereichen und ein geeigneter Kran zum Aufsetzen des Mastteils auf das Maststück vorgesehen.

Aus der DE 103 08 239 A1 ist eine Produktionsanlage für Windenergieanlagen bekannt, bei der Kräne auf einem Areal vorgesehen sind, die die Bauteile transportieren und anheben.

Da der Bedarf an erneuerbarer Energie ständig steigt, wird auch in Zukunft die Anzahl von Offshore-Windenergieanlagen erheblich zunehmen. In diesem Zusammenhang wird angestrebt, zumindest eine Baugruppe aus Fundament und Mast, möglichst jedoch die komplette Windenergieanlage an Land zu fertigen, um von den Bedingungen im Offshore-Bereich unabhängig zu sein.

Der Erfindung liegt daher die Aufgabe zugrunde, ein Verfahren zum Herstellen zumindest einer Baugruppe von Offshore-Windenergieanlagen zu schaffen, durch das eine effiziente, kostengünstige und flexible industrielle Großserienfertigung von Baugruppen oder von kompletten Windenergieanlagen erreicht ist.

Diese Aufgabe wird durch ein Verfahren mit den Merkmalen des Anspruchs 1 gelöst.

Vorteilhaft ist bei der Erfindung, dass auf einfache Weise in mehreren Produktionslinien gleichzeitig Flachgründungen gefertigt und später auch gleichzeitig Maststücke auf den jeweiligen Flachgründungen hergestellt werden können. Je nach Bedarf kann somit flexibel auf die Nachfrage reagiert und die Anzahl der aktiven Produktionslinien angepasst werden. Ein weiterer Vorteil wird darin gesehen, dass die Baugruppen bzw. komplette Offshore-Windenergieanlagen weitgehend unabhängig von der Witterung hergestellt werden können. Die Baugruppen oder kompletten Anlagen werden an Land gefertigt und als Einheit zum Bestimmungsort transportiert und dort installiert.

In der Produktionsanlage ist ein Bereich vorgesehen, der als Zwischenlager für Flachgründungen mit Maststück dient. Ein solches Zwischenlager dient als Puffer zwischen der Produktion der Komponenten aus Beton und der weiteren Montage des Mastoberteils und Maschinengehäuses. Der aus Flachgründung und Maststück bestehende Unterbau kann somit jederzeit aus dem Zwischenlager abgerufen und mit dem Mastoberteil und gegebenenfalls dem Maschinengehäuse und Rotor komplettiert werden.

Zweckmäßigerweise erfolgt die Fertigung der Flachgründung auf Plattformen, die geeignet sind, die Flachgründungen auf den Schienen in den jeweils folgenden Bereich der Produktionsanlage zu verschieben. Die Flachgründungen verbleiben in jeder der Produktions- oder Lagerstufen auf der jeweiligen Plattform, bis die Baugruppe bzw. die komplette Windenergieanlage von dem Installationsschiff aufgenommen wird. Mit diesen Plattformen können selbst schwere Lasten, deren Gewicht wie im vorliegenden Fall beispielsweise 4000 Tonnen oder mehr betragen kann, mühelos transportiert werden. Für die Herstellung des Maststückes ist vorzugsweise ein Schalungsring vorgesehen, der in Etappen die jeweiligen Abschnitte des Maststückes produziert. Außerdem ist es zweckmäßig, dass auf den Montagebereich folgend unmittelbar an einem Hafenbecken eine als Lift dienende höhenverstellbare Plattform vorgesehen ist. Diese ermöglicht es, die Baugruppe oder die komplette Windenergieanlage auf einer Sohle des Hafenbeckens abzusetzen, wo sie von einem geeigneten Installationsschiff aufgenommen werden kann.

Ein Ausführungsbeispiel des erfindungsgemäßen Verfahrens zur Herstellung von Offshore-Windenergieanlagen und eine hierfür geeignete Produktionsanlage sind ist nachstehend anhand der Zeichnung näher erläutert. In der Zeichnung zeigt:
- Fig. 1: die schematische Darstellung einer Produktionsanlage für Offshore-Windenergieanlagen,
- Fig. 2: die Produktion von Fundamenten in Form von Flachgründungen,
- Fig. 3: die Fertigung eines aus Beton bestehenden Maststückes auf einer Flachgründung,
- Fig. 4: die Flachgründung mit dem Maststück in einer Position zum Aufbau der oberen Mastelemente und des Maschinengehäuses mit einem Rotor,
- Fig. 5: die Montage des oberen Mastelementes,
- Fig. 6: die fertig montierte Windenergieanlage.

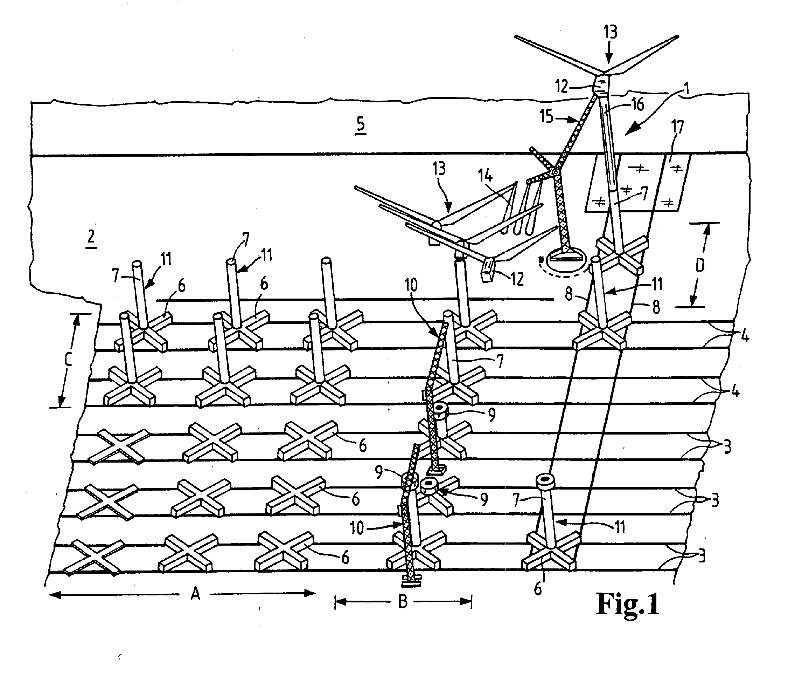

In Fig. 1 ist eine Produktionsanlage für Offshore-Windenergieanlagen 1 gezeigt, wobei die Produktionsanlage in Bereiche unterteilt ist, in denen jeweils bestimmte Fertigungsschritte durchgeführt werden. Die Produktionsanlage befindet sich unmittelbar neben einem Hafenbecken 5. Ein Areal 2 der Produktionsanlage ist mit einem System parallel verlaufender Schienen 3 und 4 versehen, zu denen zwei Schienen 8 orthogonal angeordnet sind. Die Schienen 3, 4 und 8 dienen dazu, Flachgründungen 6, die als Fundament für die Offshore-Windenergieanlagen 1 vorgesehen sind, auf dem Areal 2 verfahrbar zu machen. Die Flachgründungen 6, deren Gewicht beispielsweise 4000 Tonnen beträgt, sind mittels Rollen auf den Schienen 3, 4 bzw. 8 abgestützt.

In einem Bereich A werden die Flachgründungen 6 auf mehreren Produktionslinien gleichzeitig produziert, wobei die Flachgründungen 6, wie in Fig. 1 zu sehen, nach rechts bewegt werden in einen Bereich B, in dem auf den Flachgründungen 6 jeweils ein Maststück 7 aus Beton gefertigt wird. Hierzu wird ein Schalungsring 9 eingesetzt, mittels dem beginnend auf der Flachgründung 6 das Maststück 7 in mehreren Etappen oder gleitend kontinuierlich gefertigt wird. Nach Erreichen der gewünschten Höhe des Maststückes 7 wird der Schalungsring 9 von einem Kran 10 aufgenommen und auf den Boden der Produktionsanlage oder ein nächstes Flachgründungskreuz abgelassen.

Die Flachgründung 6 und das Maststück 7 bilden einen aus Beton gefertigten Unterbau 11 der Windenergieanlage 1, der in einem Bereich C zwischengelagert wird. Hierzu wird der Unterbau 11 auf den Schienen 8 in Richtung auf das Hafenbecken 5 verschoben, bis die Schienen 4 erreicht sind, auf denen der Unterbau 11 in den Bereich C verfahren wird. Aus diesem Zwischenlager im Bereich C wird der Unterbau 11 in einen Bereich D zur Endmontage gebracht. Im Bereich D werden weitere Komponenten der Windenergieanlagen 1 bereitgehalten, wie beispielsweise Maschinengehäuse 12 mit Rotor 13 und Rotorblättern 14.

Im Endmontagebereich D steht ein hoher Kran 15 zur Verfügung, der auf dem Maststück 7 ein aus Stahl bestehendes Stahloberteil 16 aufstellt, das mit dem Maststück 7 fest verbunden wird. Schließlich wird das Maschinengehäuse 12 auf die Mastspitze des Mastoberteils 16 gesetzt und montiert, wobei der Rotor 13 bereits zum Teil enthalten sein kann und lediglich ein drittes Rotorblatt 14 angebracht werden muss. Damit ist die Windenergieanlage 1 komplett und kann zum Transport bereitgestellt werden. Hierfür ist beispielsweise eine absenkbare Plattform 17 vorgesehen, die die Windenergieanlage 1 mit ihrer Flachgründung 6 auf das Niveau der Sohle des Hafenbeckens 5 absenkt. Statt einer absenkbaren Plattform kann auch eine ins Hafenbecken führende Rampe vorgesehen sein. Dort kann die Windenergieanlage 1 von einem Installationsschiff aufgenommen und an den Bestimmungsort im Offshore-Bereich transportiert werden.

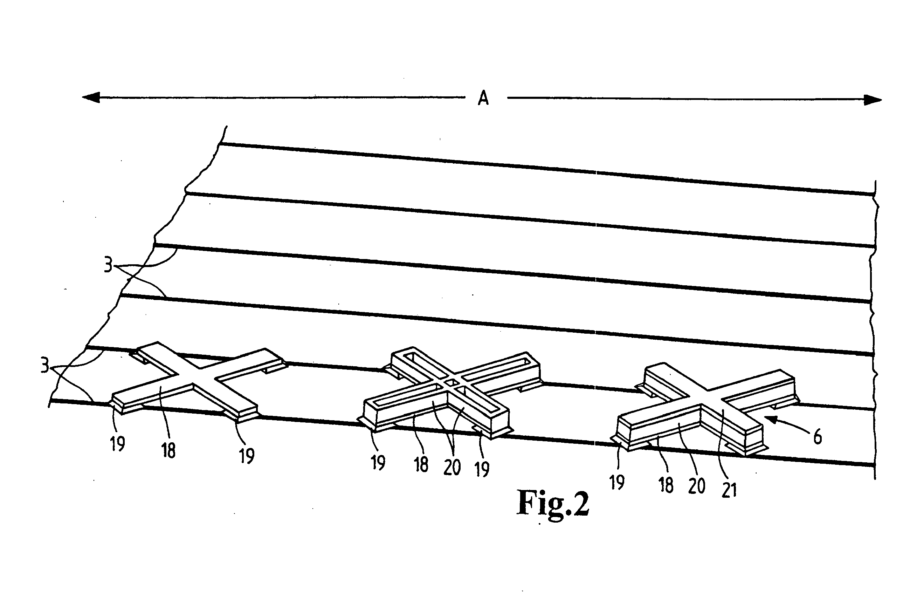

Die Fig. 2 zeigt in vergrößerter Darstellung einen Ausschnitt des Bereichs A zur Produktion der Flachgründung 6. Hierzu sind auf den Schienen 3 in der Zeichnung nicht gezeigte Plattformen vorgesehen, die während des gesamten Produktionsverfahrens die Anlagenteile tragen. Wie in Fig. 2, links gezeigt ist, wird zunächst ein Betonkreuz 18 gefertigt, an dessen Enden jeweils Stützfüße 19 vorgesehen sind. Im nächsten Produktionsschritt werden - wie in der Mitte von Fig. 2 dargestellt - Blöcke 20 aus Beton auf dem Betonkreuz 18 gegossen oder aufgesetzt und befestigt, wobei die Blöcke 20 als Hohlprofil ausgebildet sein können. Schließlich wird gemäß Darstellung rechts in Fig. 2 zur Bildung der Flachgründung 6 noch eine Deckschicht 21 aufgebracht, durch die die Flachgründungen 6 ein allseits geschlossenes Gebilde darstellen.

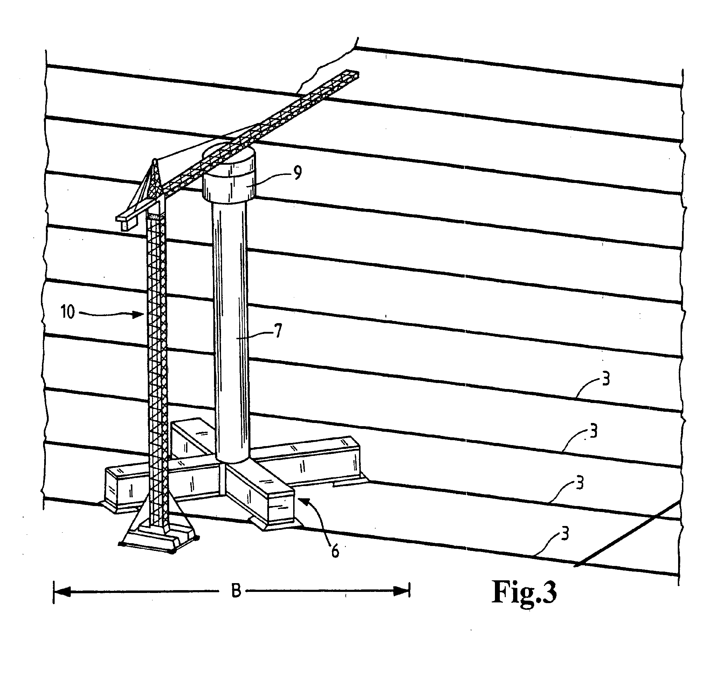

In Fig. 3 ist gezeigt, dass in der nächsten Produktionsstufe im Bereich B das Maststück 7 auf der Flachgründung 6 erzeugt wird. Hierzu wird ein Schalungsring 9 benutzt, der zum Gießen des Betons für das Maststück 7 auf der Flachgründung 6 aufgesetzt wird. Nach Verfestigung des jeweiligen Abschnitts des Maststückes 7 wird der Schalungsring 9 von dem Kran 10 weiter angehoben, um den nächsten Abschnitt zu gießen (Kletterschalungsprinzip). Wenn die vorgegebene Höhe des Maststücks 7 erreicht ist, wird der Schalungsring 9 mittels des Krans 10 abgenommen. Alternativ kann auch eine kontinuierlich arbeitende Gleitschalung, bevorzugt in Kombination mit einem schnell härtenden Beton, vorgesehen werden.

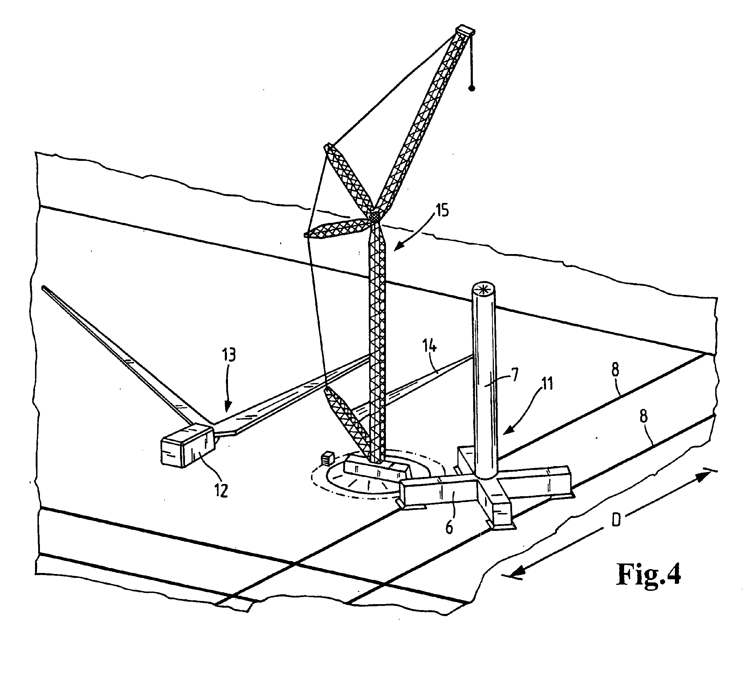

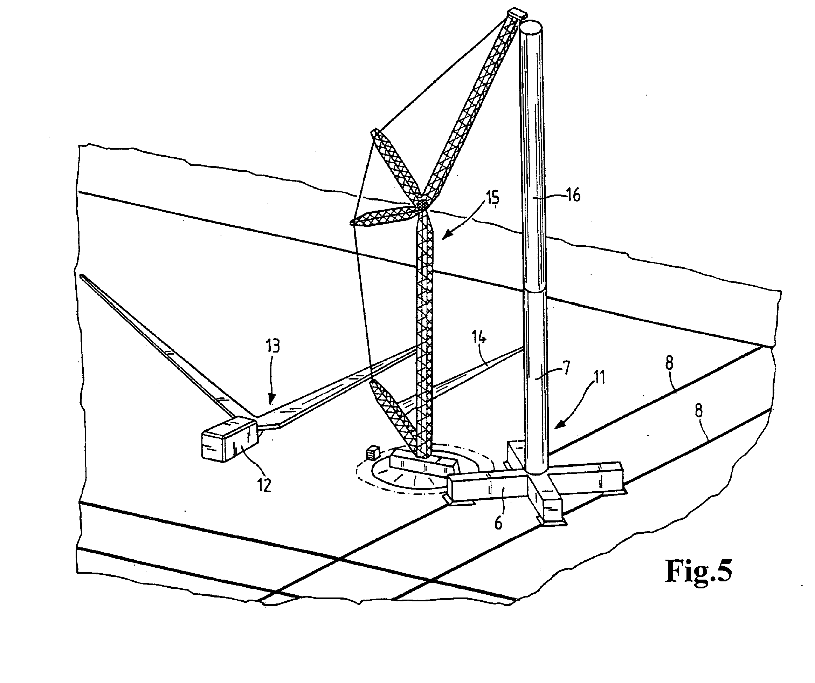

Für die weitere Montage der Windenergieanlage befindet sich gemäß Fig. 4 der aus Flachgründung 6 und Maststück 7 bestehende Unterbau 11 im Bereich D auf den Schienen 8. Zum Aufsetzen der weiteren Komponenten ist der Kran 15 vorgesehen, dessen Höhe ausreicht, um auch das Maschinengehäuse 12 mit dem Rotor 13 zu montieren. Die Fig. 5 zeigt, dass mittels des Krans 15 das aus Stahl bestehende Mastoberteil 16 auf das Maststück 7 gestellt wird, um mit diesem verbunden zu werden. Auch wenn im gezeigten Ausführungsbeispiel nur ein Mastoberteil 16 dargestellt ist, können aus fertigungstechnischen Gründen auch mehrere Mastelemente vorgesehen sein, um die gewünschte Masthöhe zu erreichen. Auf die Mastspitze ist nun noch das Maschinengehäuse 12 mit dem Rotor 13 zu setzen und das Rotorblatt 14 an der Nabe des Rotors 13 zu montieren.

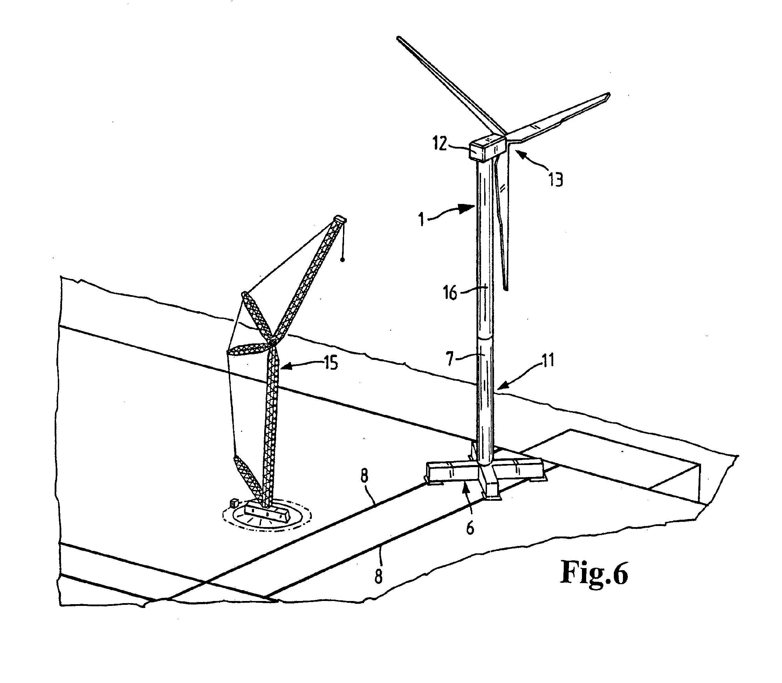

Die Fig. 6 zeigt die fertig montierte Windenergieanlage 1, die komplett zu einem gewünschten Standort im Offshore-Bereich transportiert und dort installiert wird.

Wie vorstehend beschrieben, bietet die Produktionsanlage die Möglichkeit einer industriellen Großserienfertigung von Windenergieanlagen, wobei insbesondere die Fundamente mit hohem Automatisierungsgrad kostengünstig hergestellt werden. Die Fertigungskapazitäten können flexibel an den jeweiligen Bedarf angepasst werden. Ein besonderer Vorteil ist auch durch die Installation des Mastoberteils 16 auf dem Unterbau 11 und die Montage des Maschinengehäuses 12 mit Rotor 13 auf der Mastspitze schon an Land gegeben, da diese Arbeiten unabhängig vom Wetter erfolgen können und gegenüber der konventionellen Bauweise im Offshore-Bereich auch nicht die Risiken bezüglich des Seegangs gegeben sind. Durch die vorliegende Erfindung ist eine wesentlich kostengünstigere und flexiblere Herstellung von kompletten Windenergieanlagen erreicht, wobei nach der Installation am Meeresboden nur noch die Betriebnahme der Turbine erfolgt, alle übrigen Arbeiten können bereits an Land erledigt werden.

## Patentansprüche

1. Verfahren zum Herstellen zumindest einer Baugruppe von Offshore-Windenergieanlagen,
**dadurch gekennzeichnet, dass** in einem ersten Bereich (A) einer Produktionsanlage ein als Flachgründung (6) gestaltetes Fundament aus Beton gefertigt wird, danach die Flachgründung (6) in einen Bereich (B) der Produktionsanlage verfahren wird, in welchem auf der Flachgründung (6) ein Maststück (7) aus Beton erzeugt wird, wobei Flachgründung (6) und Maststück (7) einen Unterbau (11) bilden, und anschließend der Unterbau (11) in einen Bereich (D) der Produktionsanlage verfahren wird, in dem mittels eines Krans (15) auf dem Maststück (7) ein aus Stahl bestehendes Mastoberteil aufgesetzt und mit diesem fest verbunden wird.

2. Verfahren nach Anspruch 1,
**dadurch gekennzeichnet, dass** auf eine Mastspitze des Mastoberteils (16) ein Maschinengehäuse (12) mit Rotor (13) montiert wird.

3. Verfahren nach Anspruch 1 oder 2,
**dadurch gekennzeichnet, dass** die Fertigung der Flachgründung (6) auf Plattformen erfolgt, die mittels Rollen auf Schienen (3, 4, 8) abgestützt sind und die Flachgründungen (6) auf den Schienen (3, 4, 8) in den jeweils folgenden Bereich der Produktionsanlage verschoben werden.

4. Verfahren nach einem der Ansprüche 1 bis 3,
**dadurch gekennzeichnet, dass** die Fertigung des Maststückes (7) mittels eines Schalungsringes (9) erfolgt.

5. Verfahren nach einem der Ansprüche 1 bis 4,
**dadurch gekennzeichnet, dass** die Fertigung der Flachgründungen in drei Produktionsschritten erfolgt, da in einem ersten Schritt ein Betonkreuz (18) mit Stützfüßen (19) gefertigt wird, danach Blöcke (20) aus Beton auf dem Betonkreuz (18) gegossen oder aufgesetzt und befestigt werden und schließlich in einem dritten Schritt eine Deckschicht (21) aufgebracht wird.

## Claims

1. Method for the production of at least one sub-assembly of offshore wind power plants,
**characterised in that** a concrete foundation designed as a raft foundation (6) is produced in a first region (A) of a production plant, the raft foundation (6) is subsequently moved into a region (B) of the production plant, in which a mast element (7) is produced from concrete on the raft foundation (6), wherein the raft foundation (6) and mast element (7) form a sub-structure (11), and subsequently the sub-structure (11) is moved into a region (D) of the production plant, in which a mast upper part made of steel is placed on the mast element (7) by means of a crane (15), said mast upper part being fixedly connected to the mast element (7).

2. Method according to claim 1,
**characterised in that** a machine housing (12) with rotor (13) is mounted on a mast top of the mast upper part (16).

3. Method according to claim 1 or 2,
**characterised in that** the production of the raft foundation (6) is realised on platforms which are supported by means of rollers on rails (3, 4, 8) and the raft foundations (6) are displaced on the rails (3, 4, 8) into the respectively following region of the production plant.

4. Method according to one of the claims 1 to 3,
**characterised in that** the production of the mast element (7) is realised by means of a formwork ring (9).

5. Method according to one of the claims 1 to 4,
**characterised in that** the production of the raft foundations is realised in three production steps, as a concrete cross (18) with supporting feet (19) is produced in a first step, blocks (20) of concrete are subsequently cast or placed on the concrete cross (18) and secured there, and finally a covering layer (21) is applied in a third step.

## Revendications

1. Procédé pour produire au moins un module d'éoliennes offshore,
**caractérisé en ce que** dans une première zone (A) d'une installation de production est fabriqué un fondement en béton conçu comme une fondation plate (6), après quoi ladite fondation plate (6) est amenée dans une zone (B) de l'installation de production, dans laquelle un élément de mât (7) en béton est produit sur la fondation plate (6), étant précisé que la fondation plate (6) et l'élément de mât (7) forment une base (11), et la base (11) est ensuite amenée dans une zone (D) de l'installation de production, dans laquelle un élément supérieur de mât en acier est posé à l'aide d'une grue (15) sur l'élément de mât (7) et est relié solidement à celui-ci.

2. Procédé selon la revendication 1,
**caractérisé en ce qu'**un carter de machine (12) avec un rotor (13) est monté sur un sommet de mât de l'élément supérieur de mât (16).

3. Procédé selon la revendication 1 ou 2,
**caractérisé en ce que** la production de la fondation plate (6) se fait sur des plates-formes qui sont en appui sur des rails (3, 4, 8) à l'aide de roues, et les fondations plates (6) sont déplacées sur les rails (3, 4, 8) et amenées dans la zone suivante de l'installation de production.

4. Procédé selon l'une des revendications 1 à 3,
**caractérisé en ce que** la production de l'élément de mât (7) se fait à l'aide d'un coffrage annulaire (9).

5. Procédé selon l'une des revendications 1 à 4,
**caractérisé en ce que** la production des fondations plates se fait en trois étapes, étant donné que lors d'une première étape, une croix en béton (18) avec des pieds d'appui (19) est produite, que des blocs en béton (20) sont ensuite coulés ou posés et fixés sur la croix en béton (18), et que lors d'une troisième étape, enfin, une couche de recouvrement (21) est posée.
